# EUROPEAN PATENT SPECIFICATION

(11) **EP 3 825 016 B1**
(45) Date of publication and mention of the grant of the patent: **01.11.2023**
(21) Application number: 19210257.2
(22) Date of filing: 20.11.2019
(51) Int. Cl.: B08B 9/34

(54) **FLUID CONVEYING SYSTEM FOR A WASHING MACHINE**
FLUIDFÖRDERSYSTEM FÜR EINE WASCHMASCHINE
SYSTÈME DE TRANSPORT DE FLUIDES POUR UNE MACHINE À LAVER

(43) Date of publication of application: 26.05.2021
(73) Proprietor: Sidel S.p.A., 43126 Parma (IT)
(72) Inventor: Berzaghi, Claudio, 37139 Verona (IT); Belviglieri, Alessandro, 37139 Verona (IT)
(74) Representative: Sidel Group

(56) References cited:
- EP-A1- 1 824 577
- WO-A2-2008/113069
- US-A- 5 425 385
- US-A1- 2018 361 278

## Description

The present invention relates to a fluid conveying system for a washing machine and to a method for operating a fluid conveying system.

In general, washing machines are known with the purpose of cleaning the empty containers upstream of a filling and a labelling station, in which the containers are respectively filled with a pourable product and labelled with respective labels.

An example of washing machine is known from EP2727660.

Known washing machines essentially comprise:
- a feeding system;
- a washing tunnel;
- a looped chain conveyor advancing the containers along a closed washing path and extending inside the washing tunnel from an inlet station to an outlet station; and
- a plurality of sequential treatment zones arranged between the inlet station and the outlet station, and through which the chain conveyor advances the containers.

According to the advancing direction of containers along the washing tunnel, the treatment zones comprise, in sequence, a prewash zone, a first cleaning zone, a second cleaning zone and a plurality of consecutive rinsing zones.

The first and the second cleaning zones usually comprise respective cleaning baths, which are filled with a high-temperature cleaning agent and are arranged to receive and soak the advancing containers.

On the other hand, each prewash zone and each rinsing zone comprises a plurality of fluid outlets, which are configured to direct a treating fluid towards the containers.

Furthermore, each prewash or rinsing zone comprises a respective tank, which collects the ejected treating fluid dripping from the advancing containers and supplies the respective fluid outlets with the collected treating fluid, which, therefore, is recirculated within the same zone.

To this purpose, each prewash or rinsing zone comprises a respective fluid conveying system, which conveys the treating fluid from the respective tank to the respective fluid outlets.

In detail, each fluid conveying system comprises:
- a pump, which sucks the treating fluid from the tank and delivers the suctioned treating fluid to the respective fluid outlet; and
- a first filter, fluidly interposed between the pump and the respective fluid outlet and adapted to filter the treating fluid delivered by the pump.

However, each time maintenance operations of the first filter need to be carried out in a fluid conveying system of this kind, the flow of the treating fluid through the first filter must be prevented and the pressure inside the first filter must be released.

As a consequence, in order to safely perform the maintenance operations of the first filter, the operation of the washing machine must be completely interrupted, causing major economic losses.

With the aim of avoiding the interruption of the washing machine while the maintenance operations of the first filter are carried out, known fluid conveying systems comprise a second filter, identical to the first one.

In detail, the fluid conveying systems with two filters further comprise, for each first and second filter:
- first flow control means, which can be activated to prevent the treating fluid delivered by the pump from reaching the respective first, second filter to be maintained; and
- second flow control means, which can be activated to allow the return of the treating fluid from the respective first, second filter to be maintained towards the tank and the reduction of pressure inside the filter to be maintained.

Once the first and second flow control means are activated, one of first, second filter to be maintained is fluidly isolated from the pump and not anymore pressurized, the treating fluid delivered by the pump is filtered by the other one of first, second filter only and the washing machine continues to operate without interruption.

In the known fluid conveying systems with two filters, the first and second flow control means are mechanical or electric valves.

Known from US5425385 is a control system for a fluid conveying system in a washing machine, comprising a first filter and a second filter in parallel with flow control means to isolate one of the filters to allow cleaning and replacing of the isolated filter.

However, since the activation of the first and second flow control means is dangerously susceptible to errors and/or relies on the experience of the maintainer worker, the filter to be maintained might be accessed by the maintainer worker while being still pressurized and/or in fluidic communication with the pump.

As a consequence, the maintainer worker might be easily exposed to life-threatening accidents.

In view of this, a need is felt within the sector for a fluid conveying system for a washing machine, wherein the filter to be maintained can be accessed only under safe conditions, so as to prevent accidents and without interrupting the washing machine.

It is an object of the present invention to provide a fluid conveying system for a washing machine, which allows to meet the abovementioned need in a simple and economic manner.

This object is achieved by the present invention, as it relates to a fluid conveying system for a washing machine, as claimed in claim 1.

The invention also relates to a method for operating a fluid conveying system, as claimed in claim 10.

One preferred embodiment is hereinafter disclosed for a better understanding of the present invention, by way of a non-limitative example and with reference to the accompanying drawings, in which:
- Figure 1 is a scheme of a fluid conveying system according to the present invention;
- Figures 2 and 3 are perspective views of a portion of the fluid conveying system of Figure 1 in respective sequential operative steps;
- Figure 4 is a perspective view of the fluid conveying system of Figure 1, with parts removed for clarity; and
- Figure 5 is a lateral view of a washing machine comprising the fluid conveying system of Figures 1 and 4.

In the following of the present description and in the claims the expression "in use" means "during operation".

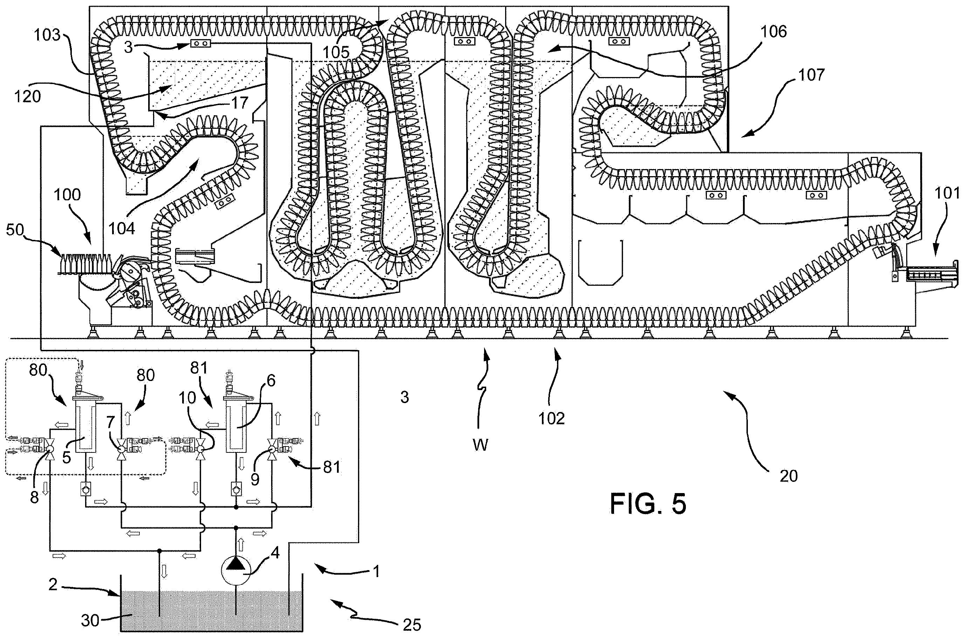

With reference to Figure 5, numeral 20 indicates a washing machine for washing containers 50.

As shown in Figure 5, washing machine 20 essentially comprises:
- an inlet station 100;
- an outlet station 101;
- a plurality of sequential treatment zones 102 arranged between inlet station 100 and outlet station 101; and
- a conveyor 103 for conveying containers 50 along an endless path W through treatment zones 102.

Path W extends between inlet station 100 at which single rows of containers 50 to be washed are loaded on conveyor 103 and outlet station 101 at which single rows of washed containers 50 are discharged.

According to the advancing direction of containers 50 from inlet station 100 towards outlet station 101, treatment zones 102 comprise, in sequence, a prewash zone 104, a first cleaning zone 105, a second cleaning zone 106 and a plurality of consecutive rinsing zones 107.

Prewash zone 104 and each rinsing zone 107 comprise respective sprinkling systems 25, only one of which is shown in Figure 5, which comprise, in turn:
- a fluid outlet 3, which is configured to direct a fluid 30 towards containers 50;
- a tank 2, which collects the ejected fluid 30 dripping from the advancing containers 50 and supplies the respective fluid outlet 3 with the collected fluid 30; and
- a fluid conveying system 1, which conveys fluid 30 from tank 2 to fluid outlet 3.

In detail, fluid 30 is a liquid, a gas or a mixture thereof.

Sprinkling system 25 may comprise more than one fluid outlet 3.

In the embodiment shown (Figure 5), tank 2 collects the ejected fluid 30 dripping from the advancing containers 50 by means of a collection tank 120, which is in fluidic communication with tank 2 by means of a fluidic line 17.

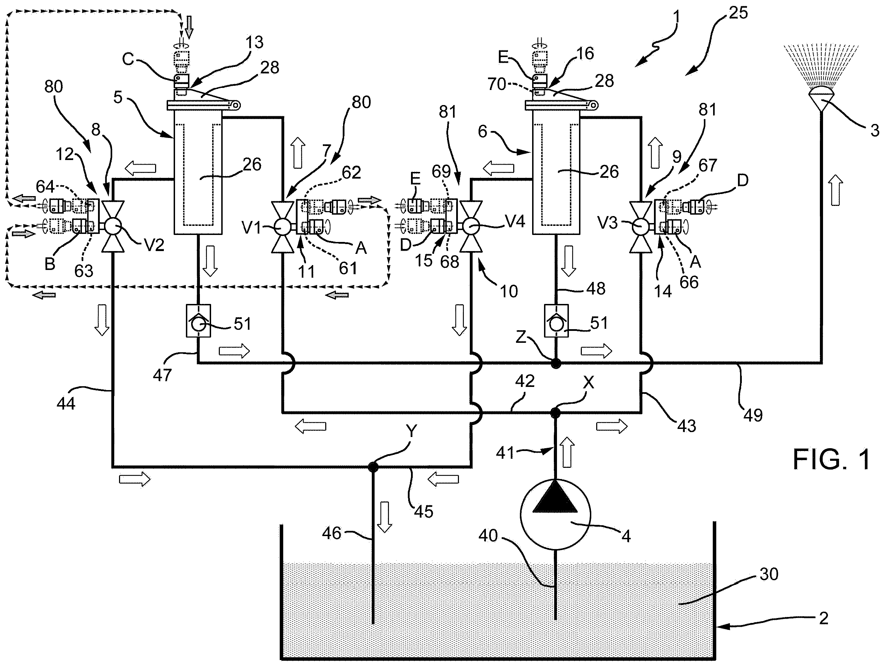

Furthermore, as shown in Figure 1, each fluid conveying system 1 comprises:
- a pump 4, adapted to suck fluid 30 from tank 2 and to deliver the suctioned fluid 30 to fluid outlet 3; and
- two filters 5, 6, fluidly interposed between pump 4 and fluid outlet 3, and adapted to filter fluid 30 delivered by pump 4.

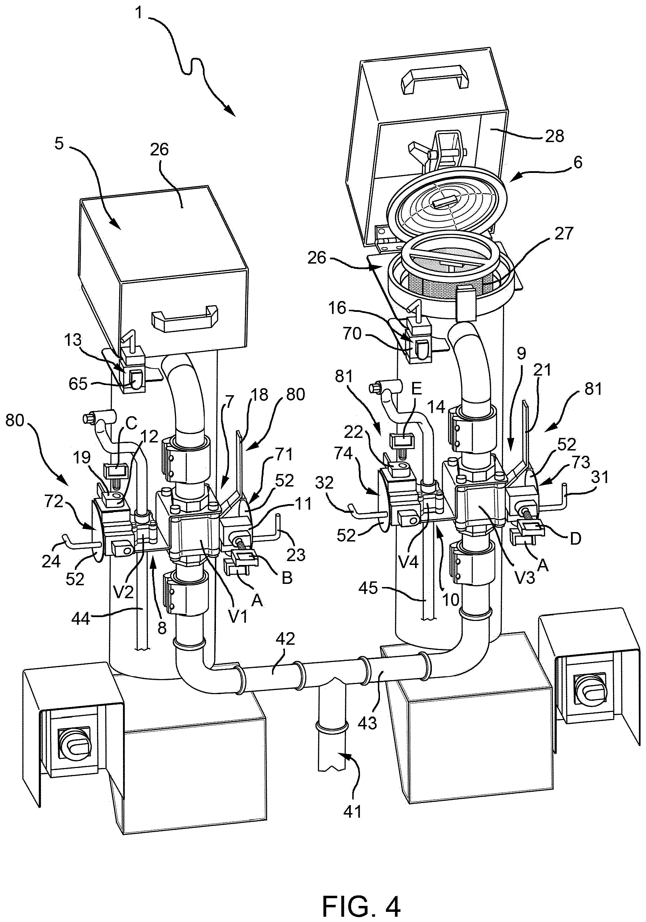

In detail, each filter 5, 6 comprises a case 26 with a lid 28, which houses a replaceable cartridge 27 (Figure 4).

In the embodiment shown, filters 5, 6 are identical to each other.

As shown in Figure 1, sprinkling system 25 further comprises:
- a suction duct 40, which fluidly connects pump 4 to tank 2;
- a delivery duct 41, which fluidly connects pump 4 to filters 5, 6;
- a nozzle duct 49, which fluidly connects filters 5, 6 to fluid outlet 3; and
- return duct 46, which allows fluid 30 to be discharged in tank 2 and, therefore, to release pressure inside filters 5, 6.

In detail, as shown in Figures 1 and 4, sprinkling system 25 comprises two branches 42, 43 of delivery duct 41, which extend from a node X to filters 5, 6 respectively.

Sprinkling system 25 further comprises two ejection ducts 47, 48, which are jointed at a node Z in nozzle duct 49 and fluidly connect filters 5, 6 to fluid outlet 3 respectively (Figure 1).

Furthermore, sprinkling system 25 comprises two return ducts 44, 45, which are jointed at a node Y in return duct 46 and fluidly connect filters 5, 6 to tank 2 respectively (Figure 1).

In detail, each ejection duct 47, 48 comprises a non-return check valve 51, which is fluidly interposed between respective filter 5, 6 and node Z (Figure 1).

In further detail, each check valve 51 allows fluid 30 to flow through it only from the respective filter 5, 6 towards fluid outlet 3.

In this way, fluid 30 is prevented from flowing from a filter 5, 6 to the other one 6, 5 through ejection ducts 47, 48.

Furthermore, fluid conveying system 1 comprises:
- flow control means 7, 9, which can be selectively activated to prevent fluid 30 delivered by pump 4 from reaching filter 5 or 6 respectively; and
- flow control means 8, 10, which can be selectively activated to allow the return of fluid 30 from filter 5 or 6 respectively, towards tank 2 and the reduction of pressure inside filters 5 or 6 respectively.

In detail, flow control means 7, 9 are arranged along branches 42, 43 respectively (Figure 1).

Furthermore, flow control means 8, 10 are arranged along return ducts 44, 45 respectively (Figure 1).

In further detail, flow control means 7, 9 comprise a feeding valve V1, V3 respectively. Flow control means 8, 10 comprise a release valve V2, V4 respectively (Figures 1 and 4) .

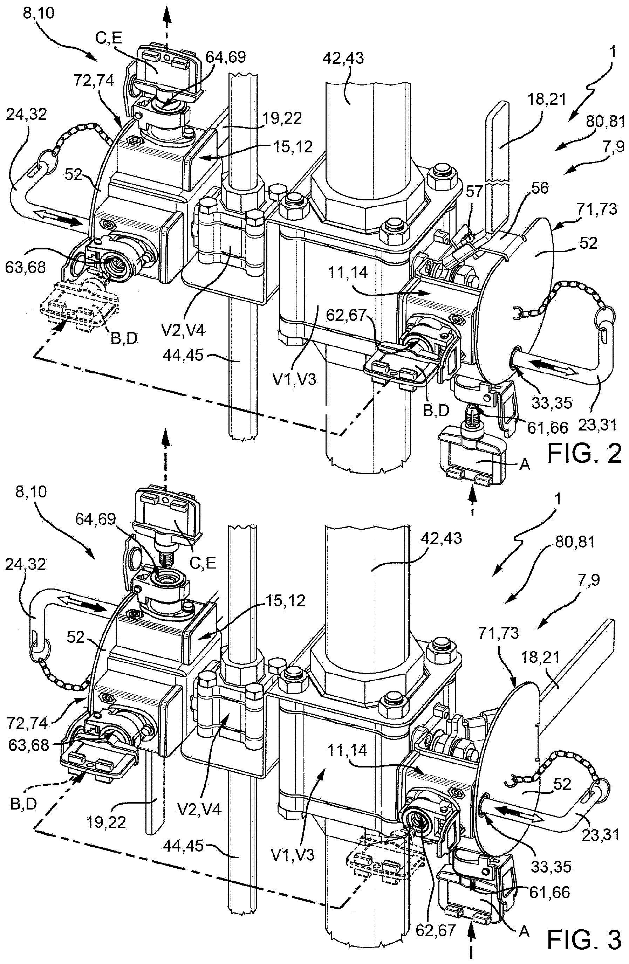

Feeding valves V1, V3 can be set in:
- respective open positions, in which flow control means 7, 9 are deactivated and fluid 30 delivered by pump 4 is allowed to reach respective filters 5, 6 along respective branches 42, 43; (Figure 2) or
- respective closed positions, in which flow control means 7, 9 are activated and fluid 30 delivered by pump 4 is prevented from reaching respective filters 5, 6 along respective branches 42, 43 (Figure 3).

Feeding valves V1, V3 are set in the respective open or closed positions, by means of respective handles 18, 21 (Figures 2, 3 and 4).

Similarly, release valves V2, V4 can be set in:
- respective open positions, in which flow control means 8, 10 are activated, thus allowing fluid 30 to return from respective filters 5, 6 towards tank 2 and pressure inside filters 5, 6 to be reduced (Figure 3); or
- respective closed positions, in which flow control means 8, 10 are deactivated, fluid 30 is prevented from returning from respective filters 5, 6 towards tank 2 and pressure inside respective filters 5, 6 is prevented from being reduced (Figure 2).

Release valves V2, V4 are set in the respective open or closed positions, by means of respective handles 19, 22 (Figures 2, 3 and 4).

In the embodiment shown, handles 18, 19, 21, 22 can be operated only by manual rotation.

Advantageously, fluid conveying system 1 comprises:
- access control means 80, which can be operated to subsequently activate flow control means 7, 8 and to make accessible filter 5 after flow control means 7 and 8 have been activated, i.e. after valve V1 has been closed and valve V2 has been opened; and
- access control means 81, which can be operated to subsequently activate flow control means 9, 10 and to make accessible filter 6 after flow control means 9 and 10 have been activated, i.e. after valve V3 has been closed and valve V4 has been opened.

In greater detail, access control means 80, 81 are mechanical access control means, i.e. they can be operated only by means of mechanical operations.

In the embodiment shown, access control means 80, 81 are not electrically or pneumatically operated.

In the present description and in the claims, the expressions of the type "element x corresponds to element y" mean that elements x and y are related to each other and that element x is preferably located in proximity to element Y.

In detail, access control means 80 of filter 5 comprise (Figures 2, 3 and 4):
- keys A, B, C;
- lock sets 11, 12, 13, which correspond to valve V1, valve V2 and lid 28 of filter 5 respectively;
- deadbolts 23, 24, which correspond to valves V1, V2 respectively; and
- elements 71, 72, each having a plate portion 52 and a flap 56 and corresponding to valves V1, V2 respectively.

Lock set 11 comprises, in turn (Figures 2 and 3):
- two keyholes 61, 62 for the insertion and the turning of keys A, B respectively, and
- one deadbolt hole 33 for the insertion of deadbolt 23.

Lock set 12 comprises:
- two keyholes 63, 64 for the insertion and the turning of keys B, C respectively; and
- one deadbolt hole 34 (not shown) for the insertion of deadbolt 24.

Lock set 13 comprises one keyhole 65 for the insertion and the turning of key C (Figure 4).

Each deadbolt 23, 24 has:
- a first end, which can be inserted in respective deadbolt holes 33, 34; and
- a second end, opposite to the first end, which is external with respect to deadbolt holes 33, 34 when the first end is inserted in the deadbolt hole and which can be manually gripped.

In detail, when first ends of deadbolts 23, 24 are inserted in respective deadbolt holes 33, 34, deadbolts 23, 24 pass through a hole of plate portions 52 of respective elements 71, 72.

When deadbolts 23, 24 are inserted in respective deadbolt holes 33, 34, plate portions 52 of respective elements 71, 72 are interposed between lock sets 11, 12 and second ends of deadbolts 23, 24 respectively (Figures 2, 3), and are prevented from moving.

In further detail, elements 71, 72 are integral with respective handles 18, 19.

Therefore, when deadbolts 23, 24 are inserted in respective deadbolt holes 33, 34, handles 18, 19 are prevented from moving as well and, as a consequence, cannot be operated.

In the embodiment shown, elements 71, 72 are integrally connected to respective handles 18, 19 by means of respective flaps 56 and bolts 57 (Figure 2).

Lock sets 11, 12, 13, keys A, B, C and deadbolts 23, 24 form a first trapped-key interlock.

In trapped-key interlocks, keys are either trapped in or released from their respective lock sets in a predetermined order.

In detail, lock set 11 is configured to (Figure 2):
- allow first end of deadbolt 23 to be removed from deadbolt hole 33, only after key A has been inserted and turned in keyhole 61;
- allow handle 18 to be operated, so as to set feeding valve V1 in the closed position, only after deadbolt 23 has been removed from deadbolt hole 33; and
- allow key B to be removed from keyhole 62, only after handle 18 has been operated, valve V1 has been set in the closed position and first end of deadbolt 23 has been inserted again in deadbolt hole 33.

Lock set 11 is further configured to (Figure 3):
- allow handle 18 to be operated, so as to set feeding valve V1 in the open position, only after key B has been inserted and turned in keyhole 62 and first end of deadbolt 23 has been removed from deadbolt hole 33; and
- allow key A to be removed from keyhole 61, only after handle 18 has been operated, valve V1 has been set in the open position and first end of deadbolt 23 has been inserted again in deadbolt hole 33.

Similarly, lock set 12 is configured to (Figure 2):
- allow first end of deadbolt 24 to be removed from deadbolt hole 34 only after key B has been inserted and turned in keyhole 63;
- allow handle 19 to be operated, so as to set release valve V2 in the open position, only after deadbolt 24 has been removed from deadbolt hole 34; and
- allow key C to be removed from keyhole 64, only after handle 19 has been operated, valve V2 has been set in the open position, and first end of deadbolt 24 has been inserted again in deadbolt hole 34.

Lock set 12 is further configured to (Figure 3):
- allow handle 19 to be operated, so as to set release valve V2 in the closed position, only after key C has been inserted and turned in keyhole 64 and first end of deadbolt 24 has been removed from deadbolt hole 34; and
- allow key B to be removed from keyhole 63, only after handle 19 has been operated, valve V2 has been set in the closed position and first end of deadbolt 24 has been inserted again in deadbolt hole 34.

Lock set 13 is configured to (Figure 4):
- allow lid 28 of filter 5 to be opened only after key C has been inserted and turned in keyhole 65 of lock set 13; and
- allow key C to be removed from keyhole 65 only after lid 28 of filter 5 has been closed.

Furthermore, access control means 81 of filter 6 comprise (Figures 2, 3 and 4):
- key A, which is shared with access control means 80 of filter 5;
- further keys D, E;
- lock sets 14, 15, 16 which correspond to valve V3, valve V4 and lid 28 of filter 6 respectively;
- deadbolts 31, 32, which correspond to valves V3, V4 respectively; and
- elements 73, 74, each having a plate portion 52 and a flap 56 and corresponding to valves V3, V4 respectively.

Lock set 14 comprises, in turn (Figures 1, 2 and 3):
- two keyholes 66, 67 for the insertion and the turning of keys A, D respectively; and
- one deadbolt hole 35 for the insertion of deadbolt 31.

Lock set 15 comprises:
- two keyholes 68, 69, for the insertion and the turning of keys D, E respectively; and
- one deadbolt hole 36 (not shown) for the insertion of deadbolt 32.

Lock set 16 comprises one keyhole 70 for the insertion and the turning of key E.

Each deadbolt 31, 32 has:
- a first end, which can be inserted in respective deadbolt holes 35, 36; and
- a second end, opposite to the first end, which is always external with respect to deadbolt holes 35, 36 when the first end is inserted in the deadbolt hole and which can be manually gripped.

In detail, when first ends of deadbolts 31, 32 are inserted in respective deadbolt holes 35, 36, deadbolts 31, 32 pass through a hole of plate portions 52 of respective elements 73, 74.

When deadbolts 31, 32 are inserted in respective deadbolt holes 35, 36, plate portions 52 of respective elements 73, 74 are interposed between lock sets 14, 15 and second ends of deadbolts 31, 32 respectively, and are prevented from moving.

In further detail, elements 73, 74 are integral with respective handles 21, 22, therefore when deadbolts 31, 32 are inserted in respective deadbolt holes 35, 36, handles 21, 22 are prevented from moving as well and, as a consequence, cannot be operated.

In the embodiment shown, elements 73, 74 are integrally connected to respective handles 21, 22 by means of respective flaps 56 and respective bolts 57 (Figure 2).

Lock sets 14, 15, 16 and keys A, D, E form a second trapped-key interlock.

In detail, lock set 14 is configured to (Figure 2):
- allow first end of deadbolt 31 to be removed from deadbolt hole 35 only after key A has been inserted and turned in keyhole 66;
- allow handle 21 to be operated, so as to set feeding valve V3 in the closed position, only after first end of deadbolt 31 has been removed from deadbolt hole 35; and
- allow key D to be removed from keyhole 67, only after handle 21 has been operated, valve V3 has been set in the closed position, and first end of deadbolt 31 has been inserted again in deadbolt hole 35.

Lock set 14 is further configured to (Figure 3):
- allow handle 21 to be operated, so as to set feeding valve V3 in the open position, only after key D has been inserted and turned in keyhole 67 and first end of deadbolt 31 has been removed from deadbolt hole 35; and
- allow key A to be removed from keyhole 66, only after handle 21 has been operated, valve V3 has been set in the open position, and first end of deadbolt 31 has been inserted again in deadbolt hole 35.

Similarly, lock set 15 is configured to (Figure 2):
- allow first end of deadbolt 32 to be removed from deadbolt hole 36 only after key D has been inserted and turned in keyhole 68;
- allow handle 22 to be operated, so as to set release valve V4 in the open position, only after first end of deadbolt 32 has been removed from deadbolt hole 36; and
- allow key E to be removed from keyhole 69, only after handle 22 has been operated, valve V4 has been set in the open position, and first end of deadbolt 32 has been inserted again in deadbolt hole 36.

Lock set 15 is further configured to (Figure 3):
- allow handle 22 to be operated, so as to set release valve V4 in the closed position, only after key E has been inserted and turned in keyhole 69 and first end of deadbolt 32 has been removed from deadbolt hole 36; and
- allow key D to be removed from keyhole 68, only after handle 22 has been operated, valve V4 has been set in the closed position, and first end of deadbolt 32 has been inserted again in deadbolt hole 36.

Lock set 16 is configured to (Figure 4):
- allow lid 28 of filter 6 to be opened only after key E has been inserted and turned in keyhole 70 of lock set 16; and
- allow key E to be removed from keyhole 70 only after lid 28 of filter 6 has been closed.

As shown in Figures 2, 3 and 4, lock sets 11, 12, 13 are adjacent to valves V1, V2 and lid 28 of filter 5 respectively.

Similarly, lock sets 14, 15, 16 are adjacent to valves V3, V4 and lid 28 of filter 6 respectively.

Preferably, as shown in Figure 4, lock sets 13, 16 are integral with respective cases 26 of respective filters 5, 6.

Furthermore, fluid conveying system 1 comprises only one key A, so as to allow the operation of access control means 80 of filter 5 or of access control means 81 of filter 6 one at a time.

As a consequence, maintenance operations can be carried-out either on filter 5 or on filter 6 in separate periods of time and never simultaneously.

During normal operating conditions of washing machine 20, when no maintenance operation is required for filter 5 or 6, key A may remain inserted in keyhole 61 or in keyhole 66, or may preferably be removed from any keyhole and stored in a different place.

Maintenance operations may still be simultaneously carried-out on filters of distinct fluid conveying systems 1 of washing machine 20.

In detail, maintenance operations may include, for example, cleaning, substitution or fixing operations of filters 5, 6.

Preferably, during normal operating conditions of washing machine 20, when no maintenance operation is required for filter 5 or 6, key B is inserted in keyhole 62, key C is inserted in keyhole 64, key D is inserted in keyhole 67 and key E is inserted in keyhole 69.

In any case, each keyhole 61, 62, 63, 64, 65; 66, 67, 68, 69, 70 can be turned by only one respective key A, B, C; A, D, E.

Preferably, each key A, B, C, D, E and each keyhole 61, 62, 63, 64, 65, 66, 67, 68, 69, 70 is provided with a respective label, having a certain respective identification mark, such as an alphanumerical character or a symbol.

Furthermore, each key has an identification mark, different from the identification marks of the other keys.

In detail, key A, keyholes 61, 66 are provided with respective labels, i.e. labels having the same identification mark.

Key B, keyholes 62, 63 are provided with respective same labels.

Key C, keyholes 64, 65 are provided with respective same labels.

Key D, keyholes 67, 68 are provided with respective same labels.

Key E, keyholes 69, 70 are provided with respective same labels.

Furthermore, in the embodiment shown, when feeding valves V1, V3 are moved from the respective open positions (Figure 2) to the respective closed positions (Figure 3), respective handles 18, 21 are rotated clockwise by 90° with respect to relative lock sets 11, 14.

Similarly, in the embodiment shown, when release valves V2, V4 are moved from the respective open positions (Figure 3) to the respective closed positions (Figure 2), respective handles 19, 22 are rotated clockwise by 90° with respect to relative lock sets 12, 15.

Furthermore, second ends of respective deadbolts 23, 24, 31, 32 are connected to plates 52 of respective elements 71, 72, 73, 74, for example by means of a chain (Figures 2, 3) .

The operation of fluid conveying system 1 is described starting from an initial condition, wherein pump 4 sucks fluid 30 from tank 2 and delivers the suctioned fluid 30 to filters 5, 6 (Figure 1, 5).

In this condition, flow control means 7, 9 are deactivated, fluid 30 is allowed to reach filters 5, 6 respectively from pump 4, key B is inserted in keyhole 62, key C is inserted in keyhole 64, key D is inserted in keyhole 67 and key E is inserted in keyhole 69.

In addition, flow control means 8, 10, are deactivated and pressure in respective filters 5 or 6 is prevented from being released.

In other words, fluid 30 is prevented from returning from filters 5, 6 to tank 2.

In detail, feeding valves V1, V3 are in respective open positions and release valves V2, V4 are in respective closed positions.

Fluid 30 is thus filtered by filters 5, 6, which are connected in parallel, and ejected towards fluid outlet 3 by means of ejection ducts 47, 48 and nozzle duct 49.

When maintenance operations need to be carried-out for filter 5, mechanical access control means 80 are operated to subsequently activate flow control means 7, 8.

With this aim, key A is inserted and turned in keyhole 61 of lock set 11 of valve V1 (Figure 2).

Subsequently, first end of deadbolt 23 is removed from deadbolt hole 33 and handle 18 is operated, so as to set feeding valve V1 in the closed position.

In the embodiment shown, deadbolt 23 is left hanging from plate 52 of element 71 by means of a chain.

After handle 18 has been operated, first end of deadbolt 23 is again inserted in deadbolt hole 33.

Key B can be thus turned and removed from keyhole 62 of lock set 11 of valve V1 (Figure 2).

At this stage, flow control means 7 are activated and prevent fluid 30 delivered by pump 4 from reaching filter 5.

Key B is then inserted and turned in keyhole 63 of lock set 12 of valve V2 and deadbolt 24 is removed from deadbolt hole 34 (Figure 3).

Subsequently, handle 19 is operated, so as to set release valve V2 in the open position.

After handle 19 has been operated, first end of deadbolt 24 is again inserted in deadbolt hole 34.

Key C is thus turned and removed from keyhole 64 of lock set 12 of valve V2 (Figure 3).

At this stage, flow control means 8 are activated and allow the return of fluid 30 from filter 5 towards tank 2 and the reduction of pressure inside filter 5.

Key C is then inserted and turned in keyhole 65 of lock set 13 of filter 5 and lid 28 of filter 5 is thus opened, so as to allow access and maintenance operations of filter 5.

In this condition, filter 5 is fluidly isolated from pump 4 and not anymore pressurized, fluid 30 delivered by pump 4 is filtered by filter 6 only and washing machine 20 continues to operate without interruption.

Fluid 30, which is sucked by pump 4 through suction duct 40 and delivered by pump 4 through delivery duct 41 and its branch 43 is filtered by filter 6 only, after flow control means 7 have been activated.

Once the maintenance operations of filter 5 have been completed, with the aim of restoring the functioning of filter 5, lid 28 of filter 5 is closed and key C is turned and removed from keyhole 65 of lock set 13 of filter 5.

Key C is then inserted and turned in keyhole 64 of lock set 12 of valve V2, first end of deadbolt 24 is removed from deadbolt hole 34 and handle 19 is operated, so as to set release valve V2 in the closed position.

At this stage, flow control means 8 are deactivated and prevent fluid 30 from returning from filter 5 towards tank 2 and the reduction of pressure inside filter 5.

In this condition, fluid 30 delivered by pump 4 continues to be filtered by filter 6 only.

First end of deadbolt 24 is again inserted in deadbolt hole 34 and key B is then turned and removed from keyhole 63 of lock set 12 of valve V2.

Subsequently, key B is inserted and turned in keyhole 62 of lock set 11 of valve V1, first end of deadbolt 23 is removed from deadbolt hole 33 and handle 18 is operated, so as to set feeding valve V1 in the open position.

At this stage, flow control means 7 are deactivated and allow fluid 30 delivered by pump 4 to reach filter 5.

As a consequence, in this condition fluid 30 is again filtered by both filters 5, 6, first end of deadbolt 23 is again inserted in deadbolt hole 33 and key A is removable from keyhole 61 of lock set 11 of valve V1.

The activation of flow control means 9, 10 by means of access control means 81 of filter 6 is analogous to the activation of flow control means 7, 8 by means of access control means 80 of filter 5 and is not described in detail, for the sake of brevity.

In detail, filter 6 is fluidly isolated from pump 4 and not anymore pressurized, fluid 30 delivered by pump 4 is filtered by filter 5 only and washing machine 20 continues to operate without interruption.

Fluid 30, which is sucked by pump 4 through suction duct 40 and delivered by pump 4 through delivery duct 41 and its branch 42 is filtered by filter 5 only, after flow control means 9 have been activated.

The advantages of fluid conveying system 1 and of the method according to the present invention will be clear from the above description.

In particular, since fluid conveying system 1 comprises mechanical access control means 80, 81, the filter to be maintained 5, 6 can be accessed only under safe conditions.

In fact, filter 5 (6) can be accessed only after access control means 80 (81) have been operated to activate flow control means 7 and 8 (9 and 10).

In other words, the maintainer worker is physically prevented from accessing the filter to be maintained if control means 80, 81 are wrongly operated.

In addition, access control means 80, 81 are mechanical access control means; therefore, they are much more reliable than electric access control means, such as electric valves, which are prone to failure.

In fact, each keyhole 61, 62, 63, 64, 65; 66, 67, 68, 69, 70 can be turned by only one respective key A, B, C; A, D, E and each key A, B, C, D, E can be successfully used only after various mechanical conditions are met.

As a consequence, the maintainer worker is far less exposed to accidents, compared to the known fluid conveying systems discussed in the introductory part of the present description.

Furthermore, it is possible to take advantage of the fact that first and second trapped-key interlocks are user-friendly devices, because the maintainer worker is not required to perform complex mental operations when using them.

As a consequence, during maintenance operations, safety is not influenced by the degree of experience/expertise of the maintainer worker.

Moreover, since access control means 80, 81 comprise only one key A, only one filter 5, 6 can be maintained at a time.

As a consequence, the operation of washing machine 20 needs not to be interrupted while the maintenance operations are carried out, with evident advantages on the throughput of washing machine 20.

Furthermore, since sprinkling system 25 comprises check valves 51, fluid 30 is prevented from flowing from a filter 5, 6 to the other one 6, 5 through ejection ducts 47, 48.

Finally, it is apparent that modifications and variants not departing from the scope of protection of the claims may be made to fluid conveying system 1 and to the method according to the present invention.

In detail, fluid conveying system 1 could comprise more than two filters 5, 6.

Furthermore, mechanical access control means 80 (81) could be arranged in such a way that in order to perform maintenance operations on filter 5 (6), control means 8 (10) are activated before than control means 7 (9).

## Claims

1. A fluid conveying system (1) for a washing machine (20), adapted to convey a fluid (30) from a tank (2) to a fluid outlet (3); said fluid conveying system (1) comprising:
- a pump (4) adapted to suck the fluid (30) from said tank (2) and to deliver the suctioned fluid (30) to said fluid outlet (3);
- at least one first and one second filter (5, 6; 6, 5), which are fluidly interposed between said pump (4) and said fluid outlet (3), and are adapted to filter said fluid (30) delivered by said pump (4);
- first flow control means (7; 9), fluidly interposed between said tank (2) and said first filter (5; 6), which are selectively activatable to prevent said fluid (30) delivered by said pump (4) from reaching said first filter (5; 6);
- second flow control means (8; 10), fluidly interposed between said first filter (5; 6) and said tank (2), which are selectively activatable to allow the return of said fluid (30) from said first filter (5; 6) towards said tank (2) and the reduction of pressure inside said first filter (5; 6);
- third flow control means (9; 7), fluidly interposed between said tank (2) and said second filter (6; 5), which are selectively activatable to prevent said fluid (30) delivered by said pump (4) from reaching said second filter (6; 5); and
- fourth flow control means (10; 8), fluidly interposed between said second filter (6; 5) and said tank (2), which are selectively activatable to allow the return of said fluid (30) from said second filter (6; 5) towards said tank (2) and the reduction of pressure inside said second filter (6; 5) ;
further comprising:
- first mechanical access control means (80; 81), which can be operated to subsequently activate, in use, said first and second flow control means (7, 8; 9, 10) and to make accessible said first filter (5; 6) after said first and second flow control means (7, 8; 9, 10) have been, in use, activated; and
- second mechanical access control means (81; 80), which can be operated to subsequently activate, in use, said third and fourth flow control means (9, 10; 7, 8) and to make accessible said second filter (6; 5) after said third and fourth flow control means (9, 10; 7, 8) have been, in use, activated,
wherein said first, third flow control means (7, 9; 9, 7) comprise a first and a third feeding valve (V1, V3; V3, V1) respectively; and in that said second, fourth flow control means (8, 10; 10, 8) comprise a second and a fourth release valve (V2, V4; V4, V2) respectively;
said first, third feeding valves (V1, V3; V3, V1) being settable in:
- respective open positions, in which said first, third flow control means (7, 9; 9, 7) are deactivated and said fluid (30) delivered by said pump (4) is allowed to reach said first, second filters (5, 6; 6, 5) respectively; or
- respective closed positions, in which said first, third flow control means (7, 9; 9, 7) are activated and said fluid (30) delivered by said pump (4) is prevented from reaching said first, second filters (5, 6; 6, 5) respectively;
said second, fourth release valves (V2, V4; V4, V2) being settable in:
- respective open positions, in which said second, fourth flow control means (8, 10; 10, 8) are activated, so as to allow said fluid (30) to return from respective said first, second filters (5, 6; 6, 5) towards said tank (2);
- respective closed positions, in which said second, fourth flow control means (8, 10; 10, 8) are deactivated and said fluid (30) is prevented from returning from respective said first, second filters (5, 6; 6, 5) towards said tank (2),
wherein said first mechanical access control means (80; 81) comprise a first trapped-key interlock, comprising first, second and third keys (A, B, C; A, D, E) and first, second and third lock sets (11, 12, 13; 14, 15, 16) for the insertion of said first, second and third keys (A, B, C; A, D, E) ;
said first, second and third lock sets (11, 12, 13; 14, 15, 16) corresponding to said first feeding valve (V1; V3), said second release valve (V2; V4) and said first filter (5; 6) respectively;
said second mechanical access control means (81; 80) comprising a second trapped-key interlock, comprising said first key (A) and fourth and fifth keys (D, E; B, C) and fourth, fifth and sixth lock sets (14, 15, 16; 11, 12, 13) for the insertion of said first, fourth and fifth keys (A, D, E; A, B, C);
said fourth, fifth and sixth lock sets (14, 15, 16; 11, 12, 13) corresponding to said third feeding valve (V3; V1), said fourth release valve (V4; V2) and said second filter (6; 5) respectively.

2. The fluid conveying system of claim 1, **characterized in that** said fluid (30) is filtered, in use, by said second filter (6; 5) and preferably by said second filter (6; 5) only, after, in use, said first flow control means (7; 9) have been activated; and said fluid (30) is filtered, in use, by said first filter (5; 6) and preferably by said first filter (5; 6) only, after, in use, said third flow control means (9; 7) have been activated

3. The fluid conveying system of claim 1, **characterized in that** said first mechanical access control means (80; 81) comprise:
- first and second deadbolts (23, 24; 31, 32) corresponding to said first feeding valve (V1; V3) and said second release valve (V2; V4) respectively; and
- first and second elements (71, 72; 73, 74) corresponding to said first feeding valve (V1; V3) and to said second release valve (V2; V4) respectively;
said first lock set (11; 14) comprising:
- a first and a second keyhole (61, 62; 66, 67) for the insertion and the turning of said first, second keys (A, B; A, D) respectively, and
- a first deadbolt hole (33; 35) for the insertion of said first deadbolt (23; 31);
said second lock set (12; 15) comprising:
- a third and a fourth keyhole (63, 64; 68, 69) for the insertion and the turning of said second, third keys (B, C; D, E) respectively; and
- a second deadbolt hole (34; 36) for the insertion of said second deadbolt (24; 32);
said third lock set (13; 16) comprising a fifth keyhole (65; 70) for the insertion and the turning of said third key (C; E).

4. The fluid conveying system of claim 3, **characterized in that** said first and second deadbolts (23, 24; 31, 32) are inserted, in use, in respective first, second deadbolt holes (33, 34; 35, 36) and pass through respective said first, second elements (71, 72; 73, 74);
said first feeding valve (V1; V3) and said second release valve (V2; V4) being settable in their respective open or closed positions by operating, in use, respective first, second handles (18, 19; 21, 22);
each said first, second elements (71, 72; 73, 74) being integral with respective said first, second handles (18, 19; 21, 22);
said first, second elements (71, 72; 73, 74) and respective first, second handles (18, 19; 21, 22) being prevented from moving when said first, second deadbolts (23, 24; 31, 32) are inserted, in use, in respective first, second deadbolt holes (33, 34; 35, 36).

5. The fluid conveying system of claim 4, **characterized in that** said first lock set (11; 14) is configured to:
- allow said first deadbolt (23; 31) to be removed, in use, from said first deadbolt hole (33; 35) only after said first key (A) has been inserted and preferably turned, in use, in said first keyhole (61; 66);
- allow said first handle (18; 21) to be operated, in use, so as to set, in use, said first feeding valve (V1; V3) in said closed position, only after said first deadbolt (23; 31) has been removed, in use, from said first deadbolt hole (33; 35); and
- allow said second key (B; D) to be removed, in use, from said second keyhole (62; 67), only after said first handle (18; 21) has been operated, in use, and said first feeding valve (V1; V3) has been set, in use, in said closed position, and said first deadbolt (23; 31) has been inserted, in use, in said first deadbolt hole (33; 35);
said second lock set (12; 15) being configured to:
- allow said second deadbolt (24; 32) to be removed, in use, from said second deadbolt hole (34; 36) only after said second key (B; D) has been inserted and preferably turned, in use, in said third keyhole (63; 68);
- allow said second handle (19; 22) to be operated, in use, so as to set, in use, said second release valve (V2; V4) in said open position, only after said second deadbolt (24; 32) has been removed from said second deadbolt hole (34; 36); and
- allow said third key (C; E) to be removed, in use, from said fourth keyhole (64; 69), only after said second handle (19; 22) has been operated, in use, and said second release valve (V2; V4) has been set, in use, in said open position and said second deadbolt (24; 32) has been inserted, in use, in said second deadbolt hole (34; 36).

6. The fluid conveying system of claim 4 or 5, **characterized in that** said first lock set (11; 14) is further configured to:
- allow said first handle (18; 21) to be operated, in use, so as to set, in use, said first feeding valve (V1; V3) in said open position, only after said second key (B; D) has been inserted and preferably turned, in use, in said second keyhole (62; 67) and said first deadbolt (23; 31) has been removed, in use, from said first deadbolt hole (33; 35); and
- allow said first key (A) to be removed, in use, from said first keyhole (61; 66), only after said first handle (18; 21) has been operated, in use, and said first feeding valve (V1, V3) has been set, in use, in said open position, and said first deadbolt (23; 31) has been inserted, in use, in said first deadbolt hole (33; 35);
said second lock set (12; 15) being further configured to:
- allow said second handle (19; 22) to be operated, in use, so as to set, in use, said second release valve (V2; V4) in the closed position, only after said third key (C; E) has been inserted and preferably turned, in use, in said fourth keyhole (64; 69) and said second deadbolt (24; 32) has been removed, in use, from said second deadbolt hole (34; 36); and
- allow said second key (B; D) to be removed, in use, from said third keyhole (63; 68), only after said second handle (19; 22) has been operated, in use, and said second release valve (V2; V4) has been set, in use, in said closed position, and said second deadbolt (24; 32) has been inserted, in use, in said second deadbolt hole (34; 36).

7. The fluid conveying system of any one of claims 3 to 6, **characterized in that** said first filter (5; 6) comprises a case (26) with a lid (28);
said third lock set (13; 16) being configured to:
- allow said lid (28) of said first filter (5; 6) to be opened, in use, only after said third key (C; E) has been inserted and preferably turned, in use, in said fifth keyhole (65; 70) of said third lock set (13; 16); and
- allow said third key (C; E) to be removed, in use, from said fifth keyhole (65; 70) only after, in use, said lid (28) of said first filter (5; 6) has been closed.

8. A washing machine (20) for washing containers (50), comprising:
- a conveyor (103) for conveying said containers (50) along a washing path (W);
- a tank (2);
- at least one fluid outlet (3); and
- at least one fluid conveying system (1) according to any one of the foregoing claims, which is adapted to convey a fluid (30) from said tank (2) to said at least one fluid outlet (3);
said at least one fluid outlet (3) being arranged along said washing path (W), so as to feed said fluid (30) on said containers (50) travelling, in use, along said washing path (W) .

9. The washing machine (20) of claim 8, **characterized in that** each filter (5, 6) of said at least one fluid conveying system (1) is fluidly connected to said fluid outlet (3) by means of a respective fluidic connection (47, 49; 48, 49);
said washing machine (20) further comprising at least two non-return check valves (51) along said respective fluidic connection (47, 49; 48, 49);
each said check valve (51) being fluidly interposed between respective said filter (5, 6) and said fluid outlet (3), so that said fluid (30) flowing between respective said filter (5, 6) and said fluid outlet (3) can flow, in use, only from respective said filter (5, 6) towards said fluid outlet (3).

10. Method for operating a fluid conveying system (1) of any one of claims 1 to 7 for a washing machine (20), which is adapted to convey a fluid (30) from a tank (2) to a fluid outlet (3), comprising the steps of:
i) sucking said fluid (30) from said tank (2) and delivering the suctioned fluid (30) to said fluid outlet (3) by means of a pump (4); and
ii) filtering said fluid (30) delivered by said pump (4) by means of at least one first and one second filter (5, 6; 6, 5), which are fluidly interposed between said pump (4) and said fluid outlet (3);
said method comprising the further steps of:
iii) activating first flow control means (7; 9) of said fluid conveying system (1) by means of first mechanical access control means (80; 81), so as to prevent said fluid (30) delivered by said pump (4) from reaching said first filter (5; 6); and
iv) activating second flow control means (8; 10) of said fluid conveying system (1) by means of said first mechanical access control means (80; 81), so as to allow the return of said fluid (30) from said first filter (5; 6) towards said tank (2) and the reduction of pressure inside said first filter (5; 6);and
by comprising the further steps of:
v) allowing access to said first filter (5; 6) by means of said first mechanical access control means (80; 81), after said steps iii) and iv), in order to maintain said first filter (5; 6); and
vi) filtering said fluid (30) delivered by said pump (4) by means of said second filter (6; 5) and preferably only by said second filter (6; 5), after said step iii).

11. The method of claim 10, **characterized in that** said step iii) is further executed by the steps of:
vii) inserting and preferably turning a first key (A) in a first keyhole (61; 66) of said first mechanical access control means (80; 81);
viii) setting a first feeding valve (V1; V3) of said first flow control means (7; 9) in a closed position, so as to prevent said fluid (30) delivered by said pump (4) from reaching said first filter (5; 6), after said step vii); and
ix) removing a second key (B; D) from a second keyhole (62; 67) of said first mechanical access control means (80; 81) after said step viii);
said step iv) is further executed by the steps of:
x) inserting and preferably turning said second key (B; D) in a third keyhole (63; 68) of said first mechanical access control means (80; 81), after said step ix);
xi) setting a second release valve (V2; V4) of said second flow control means (8; 10) in an open position, so as to allow the return of said fluid (30) from said first filter (5; 6) towards said tank (2) and the reduction of pressure inside said first filter (5; 6), after said step x); and
xii) removing a third key (C; E) from a fourth keyhole (64; 69) of said first mechanical access control means (80; 81) after said step xi);
said step v) is further executed by the steps of:
xiii) inserting and preferably turning said third key (C; E) in a fifth keyhole (65; 70) of said first mechanical access control means (80; 81), after said step xii); and
xiv) opening a lid (28) of said first filter (5; 6) after said step xiii).

12. The method of claim 11, **characterized by** further comprising the step of:
xv) activating third flow control means (9; 7) of said fluid conveying system (1) by means of second mechanical access control means (81; 80), so as to prevent said fluid (30) delivered by said pump (4) from reaching said second filter (6; 5);
said step xv) is further executed by the steps of:
xvi) inserting and preferably turning said first key (A) in a sixth keyhole (66; 61) of said second mechanical access control means (81; 80);
xvii) setting a third feeding valve (V3; V1) of said third flow control means (9; 7) in a closed position, so as to prevent said fluid (30) delivered by said pump (4) from reaching said second filter (6; 5), after said step xvi); and
xviii) removing a fourth key (D; B) from a seventh keyhole (67; 62) of said second mechanical access control means (81; 80) after said step xvii).

13. Method for washing containers (50) by means of a washing machine (20) according to claim 8 or 9 comprising the steps of:
xix) conveying said containers (50) along a washing path (W) by means of a conveyor (103) of said washing machine (20);
comprising the step of:
xx) conveying a fluid (30) from a tank (2) to at least one fluid outlet (3) by means of a fluid conveying system (1) operated according to any one of claims 10 to 12;
said at least one fluid outlet (3) being arranged along said washing path (W).

## Patentansprüche

1. Fluidfördersystem (1) für eine Waschmaschine (20), das dazu ausgelegt ist, ein Fluid (30) von einem Tank (2) zu einem Fluidauslass (3) zu fördern; wobei das Fluidfördersystem (1) Folgendes umfasst:
- eine Pumpe (4), die dazu ausgelegt ist, das Fluid (30) aus dem Tank (2) anzusaugen und das angesaugte Fluid (30) zu dem Fluidauslass (3) zu liefern;
- mindestens einen ersten und einen zweiten Filter (5, 6; 6, 5), die strömungstechnisch zwischen der Pumpe (4) und dem Fluidauslass (3) angeordnet und dazu ausgelegt sind, das von der Pumpe (4) gelieferte Fluid (30) zu filtern;
- erste Strömungssteuerungsmittel (7; 9), die strömungstechnisch zwischen dem Tank (2) und dem ersten Filter (5; 6) angeordnet sind, die gezielt aktivierbar sind, um zu verhindern, dass das von der Pumpe (4) gelieferte Fluid (30) den ersten Filter (5; 6) erreicht;
- zweite Strömungssteuerungsmittel (8; 10), die strömungstechnisch zwischen dem ersten Filter (5; 6) und dem Tank (2) angeordnet sind, die gezielt aktivierbar sind, um den Rückfluss des Fluids (30) von dem ersten Filter (5; 6) hin zu dem Tank (2) und die Reduzierung von Druck in dem ersten Filter (5; 6) zu ermöglichen;
- dritte Strömungssteuerungsmittel (9; 7), die strömungstechnisch zwischen dem Tank (2) und dem zweiten Filter (6; 5) angeordnet sind, die gezielt aktivierbar sind, um zu verhindern, dass das von der Pumpe (4) gelieferte Fluid (30) den zweiten Filter (6; 5) erreicht; und
- vierte Strömungssteuerungsmittel (10; 8), die strömungstechnisch zwischen dem zweiten Filter (6; 5) und dem Tank (2) angeordnet sind, die gezielt aktivierbar sind, um den Rückfluss des Fluids (30) von dem zweiten Filter (6; 5) hin zu dem Tank (2) und die Reduzierung von Druck in dem zweiten Filter (6; 5) zu ermöglichen;
ferner umfassend:
- erste mechanische Zugangssteuerungsmittel (80; 81), die betätigt werden können, um in Verwendung die ersten und zweiten Strömungssteuerungsmittel (7, 8; 9, 10) nachfolgend zu aktivieren und um den ersten Filter (5; 6) zugänglich zu machen, nachdem die ersten und zweiten Strömungssteuerungsmittel (7, 8; 9, 10) in Verwendung aktiviert wurden; und
- zweite mechanische Zugangssteuerungsmittel (81; 80), die betätigt werden können, um in Verwendung die dritten und vierten Strömungssteuerungsmittel (9, 10; 7, 8) nachfolgend zu aktivieren und um den zweiten Filter (6; 5) zugänglich zu machen, nachdem die dritten und vierten Strömungssteuerungsmittel (9, 10; 7, 8) in Verwendung aktiviert wurden,
wobei die ersten, dritten Strömungssteuerungsmittel (7, 9; 9, 7) ein erstes bzw. ein drittes Speiseventil (V1, V3; V3, V1) umfassen; und dadurch, dass die zweiten, vierten Strömungssteuerungsmittel (8, 10; 10, 8) ein zweites bzw. ein viertes Ablassventil (V2, V4; V4, V2) umfassen;
wobei die ersten, dritten Speiseventile (V1, V3; V3, V1) einstellbar sind in:
- jeweilige geöffnete Positionen, in denen die ersten, dritten Strömungssteuerungsmittel (7, 9; 9, 7) deaktiviert sind und ermöglicht wird, dass das von der Pumpe (4) gelieferte Fluid (30) jeweils die ersten, zweiten Filter (5, 6; 6, 5) erreicht; oder
- jeweilige geschlossene Positionen, in denen die ersten, dritten Strömungssteuerungsmittel (7, 9; 9, 7) aktiviert sind und verhindert wird, dass das von der Pumpe (4) gelieferte Fluid (30) jeweils die ersten, zweiten Filter (5, 6; 6, 5) erreicht;
wobei die zweiten, vierten Ablassventile (V2, V4; V4, V2) einstellbar sind in:
- jeweilige geöffnete Positionen, in denen die zweiten, vierten Strömungssteuerungsmittel (8, 10; 10, 8) aktiviert sind, um zu ermöglichen, dass das Fluid (30) von den jeweiligen ersten, zweiten Filtern (5, 6; 6, 5) hin zu dem Tank (2) zurückfließt;
- jeweilige geschlossene Positionen, in denen die zweiten, vierten Strömungssteuerungsmittel (8, 10; 10, 8) deaktiviert sind und verhindert wird, dass das Fluid (30) von den jeweiligen ersten, zweiten Filtern (5, 6; 6, 5) hin zu dem Tank (2) zurückfließt,
wobei die ersten mechanischen Zugangssteuerungsmittel (80; 81) ein erstes Schlüsseltransfersystem umfassen, das erste, zweite und dritte Schlüssel (A, B, C; A, D, E) und erste, zweite und dritte Schlosssätze (11, 12, 13; 14, 15, 16) zum Einsetzen der ersten, zweiten und dritten Schlüssel (A, B, C; A, D, E) umfasst;
wobei die ersten, zweiten und dritten Schlosssätze (11, 12, 13; 14, 15, 16) dem ersten Speiseventil (V1; V3), dem zweiten Ablassventil (V2; V4) bzw. dem ersten Filter (5; 6) entsprechen;
wobei die zweiten mechanischen Zugangssteuerungsmittel (81; 80) ein zweites Schlüsseltransfersystem umfassen, das den ersten Schlüssel (A) und vierte und fünfte Schlüssel (D, E; B, C) und vierte, fünfte und sechste Schlosssätze (14, 15, 16; 11, 12, 13) zum Einsetzen der ersten, vierten und fünften Schlüssel (A, D, E; A, B, C) umfasst;
wobei die vierten, fünften und sechsten Schlosssätze (14, 15, 16; 11, 12, 13) dem dritten Speiseventil (V3; V1), dem vierten Ablassventil (V4; V2) bzw. dem zweiten Filter (6; 5) entsprechen.

2. Fluidfördersystem nach Anspruch 1, **dadurch gekennzeichnet, dass** das Fluid (30) in Verwendung von dem zweiten Filter (6; 5) und vorzugsweise von dem zweiten Filter (6; 5) erst gefiltert wird, nachdem in Verwendung die ersten Strömungssteuerungsmittel (7; 9) aktiviert wurden; und wobei das Fluid (30) in Verwendung von dem ersten Filter (5; 6) und vorzugsweise von dem ersten Filter (5; 6) erst gefiltert wird, nachdem in Verwendung die dritten Strömungssteuerungsmittel (9; 7) aktiviert wurden.

3. Fluidfördersystem nach Anspruch 1, **dadurch gekennzeichnet, dass** die ersten mechanischen Zugangssteuerungsmittel (80; 81) Folgendes umfassen:
- erste und zweite Schlossriegel (23, 24; 31, 32), die dem ersten Speiseventil (V1; V3) bzw. dem zweiten Ablassventil (V2; V4) entsprechen; und
- erste und zweite Elemente (71, 72; 73, 74), die dem ersten Speiseventil (V1; V3) bzw. dem Ablassventil (V2; V4) entsprechen;
wobei der erste Schlosssatz (11; 14) Folgendes umfasst:
- ein erstes und ein zweites Schlüsselloch (61, 62; 66, 67) zum Einsetzen und Drehen jeweils der ersten, zweiten Schlüssel (A, B; A, D), und
- ein erstes Schlossriegelloch (33; 35) zum Einsetzen des ersten Schlossriegels (23; 31);
wobei der zweite Schlosssatz (12; 15) Folgendes umfasst:
- ein drittes und ein viertes Schlüsselloch (63, 64; 68, 69) zum Einsetzen und Drehen jeweils der zweiten, dritten Schlüssel (B, C; D, E), und
- ein zweites Schlossriegelloch (34; 36) zum Einsetzen des zweiten Schlossriegels (24; 32);
wobei der dritte Schlosssatz (13; 16) ein fünftes Schlüsselloch (65; 70) zum Einsetzen und Drehen des dritten Schlüssels (C; E) umfasst.

4. Fluidfördersystem nach Anspruch 3, **dadurch gekennzeichnet, dass** die ersten und zweiten Schlossriegel (23, 24; 31, 32) in Verwendung in jeweilige erste, zweite Schlossriegellöcher (33, 34; 35, 36) eingesetzt werden und durch jeweilige erste, zweite Elemente (71, 72; 73, 74) verlaufen;
wobei das erste Speiseventil (V1; V3) und das zweite Ablassventil (V2; V4) in ihre jeweiligen geöffneten oder geschlossenen Positionen durch Betätigen, in Verwendung, jeweiliger erster, zweiter Griffe (18, 19; 21, 22) einstellbar sind;
wobei jedes der ersten, zweiten Elemente (71, 72; 73, 74) integral mit den jeweiligen ersten, zweiten Griffen (18, 19; 21, 22) ist;
wobei die ersten, zweiten Elemente (71, 72; 73, 74) und jeweilige erste, zweite Griffe (18, 19; 21, 22) am Bewegen gehindert werden, wenn die ersten, zweiten Schlossriegel (23, 24; 31, 32) in Verwendung in jeweilige erste, zweite Schlossriegellöcher (33, 34; 35, 36) eingesetzt sind.

5. Fluidfördersystem nach Anspruch 4, **dadurch gekennzeichnet, dass** der erste Schlosssatz (11; 14) zu Folgendem ausgestaltet ist:
- Ermöglichen, dass der erste Schlossriegel (23; 31) in Verwendung aus dem ersten Schlossriegelloch (33; 35) erst entfernt wird, nachdem der erste Schlüssel (A) in Verwendung in das erste Schlüsselloch (61; 66) eingesetzt und vorzugsweise gedreht wurde;
- Ermöglichen, dass der erste Griff (18; 21) in Verwendung erst betätigt wird, um in Verwendung das erste Speiseventil (V1; V3) in die geschlossene Position einzustellen, nachdem der erste Schlossriegel (23; 31) in Verwendung aus dem ersten Schlossriegelloch (33; 35) entfernt wurde; und
- Ermöglichen, dass der zweite Schlüssel (B; D) in Verwendung erst aus dem zweiten Schlüsselloch (62; 67) entfernt wird, nachdem der erste Griff (18; 21) in Verwendung betätigt wurde und das erste Speiseventil (V1; V3) in Verwendung in die geschlossene Position eingestellt wurde und der erste Schlossriegel (23; 31) in Verwendung in das erste Schlossriegelloch (33; 35) eingesetzt wurde;
wobei der zweite Schlosssatz (12; 15) zu Folgendem ausgestaltet ist:
- Ermöglichen, dass der zweite Schlossriegel (24; 32) in Verwendung erst aus dem zweiten Schlossriegelloch (34; 36) entfernt wird, nachdem der zweite Schlüssel (B; D) in Verwendung in das dritte Schlüsselloch (63; 68) eingesetzt und vorzugsweise gedreht wurde;
- Ermöglichen, dass der zweite Griff (19; 22) in Verwendung erst betätigt wird, um in Verwendung das zweite Ablassventil (V2; V4) in die geöffnete Position einzustellen, nachdem der zweite Schlossriegel (24; 32) aus dem zweiten Schlossriegelloch (34; 36) entfernt wurde; und
- Ermöglichen, dass der dritte Schlüssel (C; E) in Verwendung erst aus dem vierten Schlüsselloch (64; 69) entfernt wird, nachdem der zweite Griff (19; 22) in Verwendung betätigt wurde und das zweite Ablassventil (V2; V4) in Verwendung in die geöffnete Position eingestellt und der zweite Schlossriegel (24; 32) in Verwendung in das zweite Schlossriegelloch (34; 36) eingesetzt wurde.

6. Fluidfördersystem nach Anspruch 4 oder 5, **dadurch gekennzeichnet, dass** der erste Schlosssatz (11; 14) ferner zu Folgendem ausgestaltet ist:
- Ermöglichen, dass der erste Griff (18; 21) in Verwendung erst betätigt wird, um in Verwendung das erste Speiseventil (V1; V3) in die geöffnete Position einzustellen, nachdem der zweite Schlüssel (B; D) in Verwendung in das zweite Schlüsselloch (62; 67) eingesetzt und vorzugsweise gedreht wurde und der erste Schlossriegel (23; 31) in Verwendung aus dem ersten Schlossriegelloch (33; 35) entfernt wurde; und
- Ermöglichen, dass der erste Schlüssel (A) in Verwendung erst aus dem ersten Schlüsselloch (61; 66) entfernt wird, nachdem der erste Griff (18; 21) in Verwendung betätigt wurde und das erste Speiseventil (V1; V3) in Verwendung in die geöffnete Position eingestellt wurde und der erste Schlossriegel (23; 31) in Verwendung in das erste Schlossriegelloch (33; 35) eingesetzt wurde;
wobei der zweite Schlosssatz (12; 15) ferner zu Folgendem ausgestaltet ist:
- Ermöglichen, dass der zweite Griff (19; 22) in Verwendung erst betätigt wird, um in Verwendung das zweite Ablassventil (V2; V4) in die geschlossene Position einzustellen, nachdem der dritte Schlüssel (C; E) in Verwendung in das vierte Schlüsselloch (64; 69) eingesetzt und vorzugsweise gedreht wurde und der zweite Schlossriegel (24; 32) in Verwendung aus dem zweiten Schlossriegelloch (34, 36) entfernt wurde, und
- Ermöglichen, dass der zweite Schlüssel (B; D) in Verwendung erst aus dem dritten Schlüsselloch (63; 68) entfernt wird, nachdem der zweite Griff (19; 22) in Verwendung betätigt wurde und das zweite Ablassventil (V2; V4) in Verwendung in die geschlossene Position eingestellt und der zweite Schlossriegel (24; 32) in Verwendung in das zweite Schlossriegelloch (34; 36) eingesetzt wurde.

7. Fluidfördersystem nach einem der Ansprüche 3 bis 6, **dadurch gekennzeichnet, dass** der erste Filter (5; 6) ein Gehäuse (26) mit einem Deckel (28) umfasst;
wobei der dritte Schlosssatz (13; 16) zu Folgendem ausgestaltet ist:
- Ermöglichen, dass der Deckel (28) des ersten Filters (5; 6) in Verwendung erst geöffnet wird, nachdem der dritte Schlüssel (C; E) in Verwendung in das fünfte Schlüsselloch (65; 70) des dritten Schlosssatzes (13; 16) eingesetzt und vorzugsweise gedreht wurde; und
- Ermöglichen, dass der dritte Schlüssel (C; E) in Verwendung erst aus dem fünften Schlüsselloch (65; 70) entfernt wird, nachdem in Verwendung der Deckel (28) des ersten Filters (5; 6) geschlossen wurde.

8. Waschmaschine (20) zum Waschen von Behältern (50), umfassend:
- einen Förderer (103) zum Fördern der Behälter (50) entlang eines Waschpfads (W);
- einen Tank (2);
- mindestens einen Fluidauslass (3); und
- mindestens ein Fluidfördersystem (1) nach einem der vorhergehenden Ansprüche, das dazu ausgelegt ist, ein Fluid (30) aus dem Tank (2) zu dem mindestens einen Fluidauslass (3) zu fördern;
wobei der mindestens eine Fluidauslass (3) entlang des Waschpfads (W) derart angeordnet ist, dass das Fluid (30) auf die Behälter (50) gespeist wird, die in Verwendung entlang des Waschpfads (W) verfahren.

9. Waschmaschine (20) nach Anspruch 8, **dadurch gekennzeichnet, dass** jeder Filter (5, 6) des mindestens einen Fluidfördersystems (1) mit dem Fluidauslass (3) mittels einer jeweiligen Fluidverbindung (47, 49; 48, 49) strömungstechnisch verbunden ist;
wobei die Waschmaschine (20) ferner mindestens zwei Rückschlagventile (51) entlang der jeweiligen Fluidverbindung (47, 49; 48, 49) umfasst;
wobei jedes der Rückschlagventile (51) strömungstechnisch zwischen jeweils dem Filter (5, 6) und dem Fluidauslass (3) derart angeordnet ist, dass das zwischen jeweils dem Filter (5, 6) und dem Fluidauslass (3) strömende Fluid (30) in Verwendung nur von jeweils dem Filter (5, 6) hin zu dem Fluidauslass (3) strömen kann.

10. Verfahren zum Betätigen eines Fluidfördersystems (1) nach einem der Ansprüche 1 bis 7 für eine Waschmaschine (20), das dazu ausgelegt ist, ein Fluid (30) von einem Tank (2) zu einem Fluidauslass (3) zu fördern, umfassend die folgenden Schritte:
i) Ansaugen des Fluids (30) aus dem Tank (2) und Liefern des angesaugten Fluids (30) zu dem Fluidauslass (3) mittels einer Pumpe (4); und
ii) Filtern des von der Pumpe (4) gelieferten Fluids (30) mittels mindestens eines ersten und eines zweiten Filters (5, 6; 6, 5), die strömungstechnisch zwischen der Pumpe (4) und dem Fluidauslass (3) angeordnet sind;
wobei das Verfahren die folgenden weiteren Schritte umfasst:
iii) Aktivieren erster Strömungssteuerungsmittel (7; 9) des Fluidfördersystems (1) mittels erster mechanischer Zugangssteuerungsmittel (80; 81), um zu verhindern, dass das von der Pumpe (4) gelieferte Fluid (30) den ersten Filter (5; 6) erreicht; und
iv) Aktivieren zweiter Strömungssteuerungsmittel (8; 10) des Fluidfördersystems (1) mittels der ersten mechanischen Zugangssteuerungsmittel (80, 81), um den Rückfluss des Fluids (30) von dem ersten Filter (5; 6) hin zu dem Tank (2) und die Reduzierung von Druck in dem ersten Filter (5; 6) zu ermöglichen; und
dadurch, dass es die folgenden weiteren Schritte umfasst:
v) Ermöglichen eines Zugangs zu dem ersten Filter (5; 6) mittels der ersten mechanischen Zugangssteuerungsmittel (80; 81) nach den Schritten iii) und iv), um den ersten Filter (5; 6) zu warten; und
vi) Filtern des von der Pumpe (4) gelieferten Fluids (30) mittels des zweiten Filters (6; 5) und vorzugsweise durch den zweiten Filter (6; 5) erst nach dem Schritt iii).

11. Verfahren nach Anspruch 10, **dadurch gekennzeichnet, dass** der Schritt iii) ferner durch die folgenden Schritte ausgeführt wird:
vii) Einsetzen und vorzugsweise Drehen eines ersten Schlüssels (A) in ein erstes Schlüsselloch (61; 66) der ersten mechanischen Zugangssteuerungsmittel (80; 81);
viii) Einstellen eines ersten Speiseventils (V1; V3) der ersten Strömungssteuerungsmittel (7; 9) in eine geschlossene Position, um zu verhindern, dass das von der Pumpe (4) gelieferte Fluid (30) den ersten Filter (5; 6) erreicht, nach dem Schritt vii); und
ix) Entfernen eines zweiten Schlüssels (B; D) aus einem zweiten Schlüsselloch (62; 67) der ersten mechanischen Zugangssteuerungsmittel (80; 81) nach dem Schritt viii);
wobei der Schritt iv) ferner durch die folgenden Schritte ausgeführt wird:
x) Einsetzen und vorzugsweise Drehen des zweiten Schlüssels (B; D) in ein drittes Schlüsselloch (63; 68) der ersten mechanischen Zugangssteuerungsmittel (80; 81), nach dem Schritt ix);
xi) Einstellen eines zweiten Ablassventils (V2; V4) der zweiten Strömungssteuerungsmittel (8; 10) in eine geöffnete Position, um den Rückfluss des Fluids (30) von dem ersten Filter (5; 6) hin zu dem Tank (2) und die Reduzierung von Druck in dem ersten Filter (5; 6) zu ermöglichen, nach dem Schritt x); und
xii) Entfernen eines dritten Schlüssels (C; E) aus einem vierten Schlüsselloch (64; 69) der ersten mechanischen Zugangssteuerungsmittel (80; 81) nach dem Schritt xi);
wobei der Schritt v) ferner durch die folgenden Schritte ausgeführt wird:
xiii) Einsetzen und vorzugsweise Drehen des dritten Schlüssels (C; E) in ein fünftes Schlüsselloch (65; 70) der ersten mechanischen Zugangssteuerungsmittel (80; 81), nach dem Schritt xii); und
xiv) Öffnen eines Deckels (28) des ersten Filters (5; 6) nach dem Schritt xiii).

12. Verfahren nach Anspruch 11, **dadurch gekennzeichnet, dass** es ferner den folgenden Schritt umfasst:
xv) Aktivieren dritter Strömungssteuerungsmittel (9; 7) des Fluidfördersystems (1) mittels zweiter mechanischer Zugangssteuerungsmittel (81; 80), um zu verhindern, dass das von der Pumpe (4) gelieferte Fluid (30) den zweiten Filter (6; 5) erreicht;
wobei der Schritt xv) ferner durch die folgenden Schritte ausgeführt wird:
xvi) Einsetzen und vorzugsweise Drehen des ersten Schlüssels (A) in ein sechstes Schlüsselloch (66; 61) der zweiten mechanischen Zugangssteuerungsmittel (81; 80);
xvii) Einstellen eines dritten Speiseventils (V3; V1) der dritten Strömungssteuerungsmittel (9; 7) in eine geschlossene Position, um zu verhindern, dass das von der Pumpe (4) gelieferte Fluid (30) den zweiten Filter (5; 6) erreicht, nach dem Schritt xvi); und
xviii) Entfernen eines vierten Schlüssels (D; B) aus einem siebten Schlüsselloch (67; 62) der zweiten mechanischen Zugangssteuerungsmittel (81; 80) nach dem Schritt xvii).

13. Verfahren zum Waschen von Behältern (50) mittels einer Waschmaschine (20) nach Anspruch 8 oder 9, umfassend die folgenden Schritte:
xix) Fördern der Behälter (50) entlang eines Waschpfads (W) mittels eines Förderers (103) der Waschmaschine (20);
umfassend den folgenden Schritt:
xx) Fördern eines Fluids (30) aus einem Tank (2) zu mindestens einem Fluidauslass (3) mittels eines Fluidfördersystems (1), das nach einem der Ansprüche 10 bis 12 betätigt wird;
wobei der mindestens eine Fluidauslass (3) entlang des Waschpfads (W) angeordnet ist.

## Revendications

1. Système (1) de transport de fluide pour une machine (20) à laver, prévu pour transporter un fluide (30) d'un réservoir (2) à une sortie (3) de fluide ; ledit système (1) de transport de fluide comportant :
- une pompe (4) prévue pour aspirer le fluide (30) à partir dudit réservoir (2) et pour amener le fluide aspiré (30) jusqu'à ladite sortie (3) de fluide ;
- au moins un premier et un deuxième filtre (5, 6 ; 6, 5), qui sont interposés fluidiquement entre ladite pompe (4) et ladite sortie (3) de fluide, et sont prévus pour filtrer ledit fluide (30) délivré par ladite pompe (4) ;
- des premiers moyens (7 ; 9) de régulation de débit, interposés fluidiquement entre ledit réservoir (2) et ledit premier filtre (5 ; 6), qui peuvent être activés sélectivement pour empêcher ledit fluide (30) délivré par ladite pompe (4) d'atteindre ledit premier filtre (5 ; 6) ;
- des deuxièmes moyens (8 ; 10) de régulation de débit, interposés fluidiquement entre ledit premier filtre (5 ; 6) et ledit réservoir (2), qui peuvent être activés sélectivement pour permettre le retour dudit fluide (30) depuis ledit premier filtre (5 ; 6) vers ledit réservoir (2) et la réduction d'une pression à l'intérieur dudit premier filtre (5 ; 6) ;
- des troisièmes moyens (9 ; 7) de régulation de débit, interposés fluidiquement entre ledit réservoir (2) et ledit deuxième filtre (6 ; 5), qui peuvent être activés sélectivement pour empêcher ledit fluide (30) délivré par ladite pompe (4) d'atteindre ledit deuxième filtre (6 ; 5) ; et
- des quatrièmes moyens (10 ; 8) de régulation de débit, interposés fluidiquement entre ledit deuxième filtre (6 ; 5) et ledit réservoir (2), qui peuvent être activés sélectivement pour permettre le retour dudit fluide (30) depuis ledit deuxième filtre (6 ; 5) vers ledit réservoir (2) et la réduction d'une pression à l'intérieur dudit deuxième filtre (6 ; 5) ;
comportant en outre :
- des premiers moyens mécaniques (80 ; 81) de contrôle d'accès, qui peuvent être actionnés pour activer subséquemment, en cours d'utilisation, lesdits premiers et deuxièmes moyens (7, 8 ; 9, 10) de régulation de débit et pour rendre accessible ledit premier filtre (5 ; 6) après que lesdits premiers et deuxièmes moyens (7, 8 ; 9, 10) de régulation de débit ont été activés en cours d'utilisation ; et
- des deuxièmes moyens mécaniques (81 ; 80) de contrôle d'accès, qui peuvent être actionnés pour activer subséquemment, en cours d'utilisation, lesdits troisièmes et quatrièmes moyens (9, 10 ; 7, 8) de régulation de débit et pour rendre accessible ledit deuxième filtre (6 ; 5) après que lesdits troisièmes et quatrièmes moyens (9, 10 ; 7, 8) de régulation de débit ont été activés en cours d'utilisation,
lesdits premiers et troisièmes moyens (7, 9 ; 9, 7) de régulation de débit comportant respectivement une première et une troisième vanne (V1, V3 ; V3, V1) d'alimentation ; et lesdits deuxièmes et quatrièmes moyens (8, 10 ; 10, 8) de régulation de débit comportant respectivement une deuxième et une quatrième soupape (V2, V4 ; V4, V2) de décharge ;
lesdites première et troisième vannes (V1, V3 ; V3, V1) d'alimentation pouvant être placées dans :
- des positions ouvertes respectives, dans lesquelles lesdits premiers et troisièmes moyens (7, 9 ; 9, 7) de régulation de débit sont désactivés et il est permis audit fluide (30) délivré par ladite pompe (4) d'atteindre lesdits premier et deuxième filtres (5, 6 ; 6, 5) respectivement ; ou
- des positions fermées respectives, dans lesquelles lesdits premiers et troisièmes moyens (7, 9 ; 9, 7) de régulation de débit sont activés et ledit fluide (30) délivré par ladite pompe (4) est empêché d'atteindre lesdits premier et deuxième filtres (5, 6 ; 6, 5) respectivement ;
lesdites deuxième et quatrième soupapes (V2, V4 ; V4, V2) de décharge pouvant être placées dans :
- des positions ouvertes respectives, dans lesquelles lesdits deuxièmes et quatrièmes moyens (8, 10 ; 10, 8) de régulation de débit sont activés, de façon à permettre audit fluide (30) de revenir depuis lesdits premier et deuxième filtres (5, 6 ; 6, 5) respectifs vers ledit réservoir (2) ;
- des positions fermées respectives, dans lesquelles lesdits deuxièmes et quatrièmes moyens (8, 10 ; 10, 8) de régulation de débit sont désactivés et ledit fluide (30) est empêché de revenir depuis lesdits premier et deuxième filtres (5, 6 ; 6, 5) respectifs vers ledit réservoir (2),
lesdits premiers moyens mécaniques (80 ; 81) de contrôle d'accès comportant un premier interverrouillage à clés piégées, comportant des première, deuxième et troisième clés (A, B, C ; A, D, E) et des premier, deuxième et troisième ensembles (11, 12, 13 ; 14, 15, 16) de serrures servant à insérer lesdites première, deuxième et troisième clés (A, B, C ; A, D, E) ;
lesdits premier, deuxième et troisième ensembles (11, 12, 13 ; 14, 15, 16) de serrures correspondant respectivement à ladite première vanne (V1 ; V3) d'alimentation, à ladite deuxième soupape (V2 ; V4) de décharge et audit premier filtre (5 ; 6) ;
lesdits deuxièmes moyens mécaniques (81 ; 80) de contrôle d'accès comportant un deuxième interverrouillage à clés piégées, comportant ladite première clé (A) et lesdites quatrième et cinquième clés (D, E ; B, C) et des quatrième, cinquième et sixième ensembles (14, 15, 16 ; 11, 12, 13) de serrures servant à insérer lesdites première, quatrième et cinquième clés (A, D, E ; A, B, C) ;
lesdits quatrième, cinquième et sixième ensembles (14, 15, 16 ; 11, 12, 13) de serrures correspondant respectivement à ladite troisième vanne (V3 ; V1) d'alimentation, à ladite quatrième soupape (V4 ; V2) de décharge et audit deuxième filtre (6 ; 5).

2. Système de transport de fluide selon la revendication 1, **caractérisé en ce que** ledit fluide (30) est filtré, en cours d'utilisation, par ledit deuxième filtre (6 ; 5) et de préférence par ledit deuxième filtre (6 ; 5) uniquement, après que lesdits premiers moyens (7 ; 9) de régulation de débit ont été activés en cours d'utilisation ; et **en ce que** ledit fluide (30) est filtré, en cours d'utilisation, par ledit premier filtre (5 ; 6) et de préférence par ledit premier filtre (5 ; 6) uniquement, après que lesdits troisièmes moyens (9 ; 7) de régulation de débit ont été activés en cours d'utilisation.

3. Système de transport de fluide selon la revendication 1, **caractérisé en ce que** lesdits premiers moyens mécaniques (80 ; 81) de contrôle d'accès comportent :
- des premier et deuxième pênes dormants (23, 24 ; 31, 32) correspondant respectivement à ladite première vanne (V1 ; V3) d'alimentation et à ladite deuxième soupape (V2 ; V4) de décharge ; et
- des premier et deuxième éléments (71, 72 ; 73, 74) correspondant respectivement à ladite première vanne (V1 ; V3) d'alimentation et à ladite deuxième soupape (V2 ; V4) de décharge ;
ledit premier ensemble (11 ; 14) de serrures comportant :
- un premier et un deuxième trou (61, 62 ; 66, 67) de serrure servant à insérer et à tourner respectivement lesdites première et deuxième clés (A, B ; A, D), et
- un premier trou (33 ; 35) de pêne dormant servant à insérer ledit premier pêne dormant (23 ; 31) ;
ledit deuxième ensemble (12 ; 15) de serrures comportant :
- un troisième et un quatrième trou (63, 64 ; 68, 69) de serrure servant à insérer et à tourner respectivement lesdites deuxième et troisième clés (B, C ; D, E) ; et
- un deuxième trou (34 ; 36) de pêne dormant servant à insérer ledit deuxième pêne dormant (24 ; 32) ;
ledit troisième ensemble (13 ; 16) de serrures comportant un cinquième trou (65 ; 70) de serrure servant à insérer et à tourner ladite troisième clé (C ; E) .

4. Système de transport de fluide selon la revendication 3, **caractérisé en ce que** lesdits premier et deuxième pênes dormants (23, 24 ; 31, 32) sont insérés, en cours d'utilisation, dans des premier et deuxième trous (33, 34 ; 35, 36) de pênes dormants respectifs et passent à travers des éléments respectifs parmi lesdits premier et deuxième éléments (71, 72 ; 73, 74) ;
ladite première vanne (V1 ; V3) d'alimentation et ladite deuxième soupape (V2 ; V4) de décharge pouvant être placées dans leurs positions ouvertes ou fermées respectives en actionnant, en cours d'utilisation, des première et deuxième poignées (18, 19 ; 21, 22) respectives ;
chacun desdits premier et deuxième éléments (71, 72 ; 73, 74) faisant corps avec lesdites première et deuxième poignées (18, 19 ; 21, 22) respectives ; lesdits premier et deuxième éléments (71, 72 ; 73, 74) et lesdites première et deuxième poignées (18, 19 ; 21, 22) respectives étant immobilisées lorsque lesdits premier et deuxième pênes dormants (23, 24 ; 31, 32) sont insérés, en cours d'utilisation, dans des premier et deuxième trous (33, 34 ; 35, 36) de pênes dormants respectifs.

5. Système de transport de fluide selon la revendication 4, **caractérisé en ce que** ledit premier ensemble (11 ; 14) de serrures est configuré pour :
- permettre audit premier pêne dormant (23 ; 31) d'être retiré, en cours d'utilisation, dudit premier trou (33 ; 35) de pêne dormant uniquement après que ladite première clé (A) a été insérée et de préférence tournée, en cours d'utilisation, dans ledit premier trou (61 ; 66) de serrure ;
- permettre à ladite première poignée (18 ; 21) d'être actionnée, en cours d'utilisation, de façon à placer, en cours d'utilisation, ladite première vanne (V1 ; V3) d'alimentation dans ladite position fermée, uniquement après que ledit premier pêne dormant (23 ; 31) a été retiré, en cours d'utilisation, dudit premier trou (33 ; 35) de pêne dormant ; et
- permettre à ladite deuxième clé (B ; D) d'être retirée, en cours d'utilisation, dudit deuxième trou (62 ; 67) de serrure, uniquement après que ladite première poignée (18 ; 21) a été actionnée, en cours d'utilisation, et que ladite première vanne (V1 ; V3) d'alimentation a été placée, en cours d'utilisation, dans ladite position fermée, et que ledit premier pêne dormant (23 ; 31) a été inséré, en cours d'utilisation, dans ledit premier trou (33 ; 35) de pêne dormant ;
ledit deuxième ensemble (12 ; 15) de serrures étant configuré pour :
- permettre audit deuxième pêne dormant (24 ; 32) d'être retiré, en cours d'utilisation, dudit deuxième trou (34 ; 36) de pêne dormant uniquement après que ladite deuxième clé (B ; D) a été insérée et de préférence tournée, en cours d'utilisation, dans ledit troisième trou (63 ; 68) de serrure ;
- permettre à ladite deuxième poignée (19 ; 22) d'être actionnée, en cours d'utilisation, de façon à placer, en cours d'utilisation, ladite deuxième soupape (V2 ; V4) de décharge dans ladite position ouverte, uniquement après que ledit deuxième pêne dormant (24 ; 32) a été retiré dudit deuxième trou (34 ; 36) de pêne dormant ; et
- permettre à ladite troisième clé (C ; E) d'être retirée, en cours d'utilisation, dudit quatrième trou (64 ; 69) de serrure, uniquement après que ladite deuxième poignée (19 ; 22) a été actionnée, en cours d'utilisation, et que ladite deuxième soupape (V2 ; V4) de décharge a été placée, en cours d'utilisation, dans ladite position ouverte et que ledit deuxième pêne dormant (24 ; 32) a été inséré, en cours d'utilisation, dans ledit deuxième trou (34 ; 36) de pêne dormant.

6. Système de transport de fluide selon la revendication 4 ou 5, **caractérisé en ce que** ledit premier ensemble (11 ; 14) de serrures est en outre configuré pour :
- permettre à ladite première poignée (18 ; 21) d'être actionnée, en cours d'utilisation, de façon à placer, en cours d'utilisation, ladite première vanne (V1 ; V3) d'alimentation dans ladite position ouverte, uniquement après que ladite deuxième clé (B ; D) a été insérée et de préférence tournée, en cours d'utilisation, dans ledit deuxième trou (62 ; 67) de serrure et que ledit premier pêne dormant (23 ; 31) a été retiré, en cours d'utilisation, dudit premier trou (33 ; 35) de pêne dormant ; et
- permettre à ladite première clé (A) d'être retiré, en cours d'utilisation, dudit premier trou (61 ; 66) de serrure, uniquement après que ladite première poignée (18 ; 21) a été actionnée, en cours d'utilisation, et que ladite première vanne (V1 ; V3) d'alimentation a été placée, en cours d'utilisation, dans ladite position ouverte, et que ledit premier pêne dormant (23 ; 31) a été inséré, en cours d'utilisation, dans ledit premier trou (33 ; 35) de pêne dormant ;
ledit deuxième ensemble (12 ; 15) de serrures étant en outre configuré pour :
- permettre à ladite deuxième poignée (19 ; 22) d'être actionnée, en cours d'utilisation, de façon à placer, en cours d'utilisation, ladite deuxième soupape (V2 ; V4) de décharge dans la position fermée, uniquement après que ladite troisième clé (C ; E) a été insérée et de préférence tournée, en cours d'utilisation, dans ledit quatrième trou (64 ; 69) de serrure et que ledit deuxième pêne dormant (24 ; 32) a été retiré, en cours d'utilisation, dudit deuxième trou (34 ; 36) de pêne dormant ; et
- permettre à ladite deuxième clé (B ; D) d'être retirée, en cours d'utilisation, dudit troisième trou (63 ; 68) de serrure, uniquement après que ladite deuxième poignée (19 ; 22) a été actionnée, en cours d'utilisation, et que ladite deuxième soupape (V2 ; V4) de décharge a été placée, en cours d'utilisation, dans ladite position fermée, et que ledit deuxième pêne dormant (24 ; 32) a été inséré, en cours d'utilisation, dans ledit deuxième trou (34 ; 36) de pêne dormant.

7. Système de transport de fluide selon l'une quelconque des revendications 3 à 6, **caractérisé en ce que** ledit premier filtre (5 ; 6) comporte un coffret (26) doté d'un couvercle (28) ;
ledit troisième ensemble (13 ; 16) de serrures étant configuré pour :
- permettre audit couvercle (28) dudit premier filtre (5 ; 6) d'être ouvert, en cours d'utilisation, uniquement après que ladite troisième clé (C ; E) a été insérée et de préférence tournée, en cours d'utilisation, dans ledit cinquième trou (65 ; 70) de serrure dudit troisième ensemble (13 ; 16) de serrures ; et
- permettre à ladite troisième clé (C ; E) d'être retirée, en cours d'utilisation, dudit cinquième trou (65 ; 70) de serrure uniquement après que, en cours d'utilisation, ledit couvercle (28) dudit premier filtre (5 ; 6) a été fermé.

8. Machine (20) à laver destinée à laver des récipients (50), comportant :
- un convoyeur (103) servant à transporter lesdits récipients (50) le long d'un trajet (W) de lavage ;
- un réservoir (2) ;
- au moins une sortie (3) de fluide ; et
- au moins un système (1) de transport de fluide selon l'une quelconque des revendications précédentes, qui est prévu pour transporter un fluide (30) dudit réservoir (2) à ladite ou auxdites sorties (3) de fluide ;
ladite ou lesdites sorties (3) de fluide étant disposées le long dudit trajet (W) de lavage, de façon à amener ledit fluide (30) sur lesdits récipients (50) se déplaçant, en cours d'utilisation, le long dudit trajet (W) de lavage.

9. Machine (20) à laver selon la revendication 8, **caractérisée en ce que** chaque filtre (5, 6) dudit ou desdits systèmes (1) de transport de fluide est relié fluidiquement à ladite sortie (3) de fluide au moyen d'une connexion fluidique (47, 49 ; 48, 49) respective ; ladite machine (20) à laver comportant en outre au moins deux clapets anti-retour (51) le long de ladite connexion fluidique (47, 49 ; 48, 49) respective ; chacun desdits clapets (51) étant interposé fluidiquement entre ledit filtre (5, 6) respectif et ladite sortie (3) de fluide, de telle sorte que ledit fluide (30) s'écoulant entre ledit filtre (5, 6) respectif et ladite sortie (3) de fluide ne puisse s'écouler, en cours d'utilisation, que dudit filtre (5, 6) respectif vers ladite sortie (3) de fluide.

10. Procédé d'exploitation d'un système (1) de transport de fluide selon l'une quelconque des revendications 1 à 7 pour une machine (20) à laver, qui est prévu pour transporter un fluide (30) d'un réservoir (2) à une sortie (3) de fluide, comportant les étapes consistant à :
i) aspirer ledit fluide (30) à partir dudit réservoir (2) et amener le fluide aspiré (30) jusqu'à ladite sortie (3) de fluide au moyen d'une pompe (4) ; et
ii) filtrer ledit fluide (30) délivré par ladite pompe (4) au moyen d'au moins un premier et un deuxième filtre (5, 6 ; 6, 5), qui sont interposés fluidiquement entre ladite pompe (4) et ladite sortie (3) de fluide ;
ledit procédé comportant les étapes supplémentaires consistant à :
iii) activer des premiers moyens (7 ; 9) de régulation de débit dudit système (1) de transport de fluide au moyen de premiers moyens mécaniques (80 ; 81) de contrôle d'accès, de façon à empêcher ledit fluide (30) délivré par ladite pompe (4) d'atteindre ledit premier filtre (5 ; 6) ; et
iv) activer des deuxièmes moyens (8 ; 10) de régulation de débit dudit système (1) de transport de fluide au moyen desdits premiers moyens mécaniques (80 ; 81) de contrôle d'accès, de façon à permettre le retour dudit fluide (30) depuis ledit premier filtre (5 ; 6) vers ledit réservoir (2) et la réduction d'une pression à l'intérieur dudit premier filtre (5 ; 6) ; et
comportant les étapes supplémentaires consistant à :
v) permettre l'accès audit premier filtre (5 ; 6) au moyen desdits premiers moyens mécaniques (80 ; 81) de contrôle d'accès, après lesdites étapes iii) et iv), afin d'entretenir ledit premier filtre (5 ; 6) ; et
vi) filtrer ledit fluide (30) délivré par ladite pompe (4) au moyen dudit deuxième filtre (6 ; 5) et de préférence uniquement par ledit deuxième filtre (6 ; 5), après ladite étape iii).

11. Procédé selon la revendication 10, **caractérisé en ce que** ladite étape iii) est en outre exécutée par les étapes consistant à :
vii) insérer et de préférence tourner une première clé (A) dans un premier trou (61 ; 66) de serrure desdits premiers moyens mécaniques (80 ; 81) de contrôle d'accès ;
viii) placer une première vanne (V1; V3) d'alimentation desdits premiers moyens (7 ; 9) de régulation de débit dans une position fermée, de façon à empêcher ledit fluide (30) délivré par ladite pompe (4) d'atteindre ledit premier filtre (5 ; 6), après ladite étape vii) ; et
ix) retirer une deuxième clé (B ; D) d'un deuxième trou (62 ; 67) de serrure desdits premiers moyens mécaniques (80 ; 81) de contrôle d'accès après ladite étape viii) ;
ladite étape iv) étant en outre exécutée par les étapes consistant à :
x) insérer et de préférence tourner ladite deuxième clé (B ; D) dans un troisième trou (63 ; 68) de serrure desdits premiers moyens mécaniques (80 ; 81) de contrôle d'accès, après ladite étape ix) ;
xi) placer une deuxième soupape (V2 ; V4) de décharge desdits deuxièmes moyens (8 ; 10) de régulation de débit dans une position ouverte, de façon à permettre le retour dudit fluide (30) depuis ledit premier filtre (5 ; 6) vers ledit réservoir (2) et la réduction d'une pression à l'intérieur dudit premier filtre (5 ; 6), après ladite étape x) ; et
xii) retirer une troisième clé (C ; E) d'un quatrième trou (64 ; 69) de serrure desdits premiers moyens mécaniques (80 ; 81) de contrôle d'accès après ladite étape xi) ;
ladite étape v) étant en outre exécutée par les étapes consistant à :
xiii) insérer et de préférence tourner ladite troisième clé (C ; E) dans un cinquième trou (65 ; 70) de serrure desdits premiers moyens mécaniques (80 ; 81) de contrôle d'accès, après ladite étape xii) ; et
xiv) ouvrir un couvercle (28) dudit premier filtre (5 ; 6) après ladite étape xiii).

12. Procédé selon la revendication 11, **caractérisé en ce qu'**il comporte en outre l'étape consistant à :
xv) activer des troisième moyens (9 ; 7) de régulation de débit dudit système (1) de transport de fluide au moyen de deuxièmes moyens mécaniques (81 ; 80) de contrôle d'accès, de façon à empêcher ledit fluide (30) délivré par ladite pompe (4) d'atteindre ledit deuxième filtre (6 ; 5) ;
ladite étape xv) étant en outre exécutée par les étapes consistant à :
xvi) insérer et de préférence tourner ladite première clé (A) dans un sixième trou (66 ; 61) de serrure desdits deuxièmes moyens mécaniques (81 ; 80) de contrôle d'accès ;
xvii) placer une troisième vanne (V3 ; V1) d'alimentation desdits troisièmes moyens (9 ; 7) de régulation de débit dans une position fermée, de façon à empêcher ledit fluide (30) délivré par ladite pompe (4) d'atteindre ledit deuxième filtre (6 ; 5), après ladite étape xvi) ; et
xviii) retirer une quatrième clé (D ; B) d'un septième trou (67 ; 62) de serrure desdits deuxièmes moyens mécaniques (81 ; 80) de contrôle d'accès après ladite étape xvii).

13. Procédé de lavage de récipients (50) au moyen d'une machine (20) à laver selon la revendication 8 ou 9, comportant les étapes consistant à :
xix) transporter lesdits récipients (50) le long d'un trajet (W) de lavage au moyen d'un convoyeur (103) de ladite machine (20) à laver ;
ce qui comporte l'étape consistant à :
xx) acheminer un fluide (30) d'un réservoir (2) à au moins une sortie (3) de fluide au moyen d'un système (1) de transport de fluide exploité selon l'une quelconque des revendications 10 à 12 ;
ladite ou lesdites sorties (3) de fluide étant disposées le long dudit trajet (W) de lavage.
